# EUROPEAN PATENT APPLICATION

(11) **EP 4 726 678 A1**
(43) Date of publication of application: **15.04.2026**
(21) Application number: 25206079.3
(22) Date of filing: 01.10.2025
(51) Int. Cl.: G06V 20/64, G06V 10/75, G06T 7/73, G06V 10/82

(54) **RECOGNITION DEVICE, MODEL GENERATION DEVICE, AND WORK SYSTEM**

(30) Priority: 10.10.2024 JP 2024177909
(71) Applicant: DENSO CORPORATION, Kariya-city, Aichi-pref., 448-8661 (JP)
(72) Inventor: HANDA, Shoichi, Kariya-city, Aichi-pref.,, 448-8661 (JP); LIU, Lanhai, Kariya-city, Aichi-pref.,, 448-8661 (JP); OZAKI, Tomoaki, Kariya-city, Aichi-pref.,, 448-8661 (JP)
(74) Representative: Winter, Brandl - Partnerschaft mbB

(57) **Abstract**

A recognition device (201, 202) includes a feature region detection unit (21) and a representative point extraction unit (23). The feature region detection unit detects at least three feature regions (62) of a target from image data (67). The representative point extraction unit calculates at least three extracted representative points from the at least three feature regions, and extracts label information (68) identifying the at least three extracted representative points. The position estimation unit estimates a position of the target based on the at least three extracted representative points and at least three reference representative points which have a predefined correct positional relationship with each other and have reference label information identifying each of the at least three reference representative points.

## Description

### TECHNICAL FIELD

The present disclosure relates to a recognition device, a model generation device, and a work system.

### BACKGROUND ART

In recent years, with the decline in the labor force population, particularly in developed countries, there has been a rapidly increasing demand for automation of tasks, for example, in factories and farms. For automation of tasks, technologies for recognizing the position and orientation of target objects are essential. In particular, there is a need to develop stable and highly accurate recognition technologies that perform well even in complex environments and with diverse target objects.

### PRIOR ART LITERATURE

### PATENT LITERATURE

### Patent Document 1: JP 2019-085168 A

### SUMMARY

However, conventional recognition technologies have not been sufficient in terms of recognition stability and accuracy, leaving room for improvement.

The present disclosure has been made in view of the above circumstances, and provides a recognition device, a model generation device, and a work system capable of stably and highly accurately recognizing the position and orientation of target objects.

A recognition device of the present disclosure includes a feature region detection unit, a representative point extraction unit, and a position estimation unit. The feature region detection unit is configured to detect at least three feature regions of a target from captured image data of the target. The representative point extraction unit is configured to calculate at least three extracted representative points from the at least three feature regions and the captured image data, and extract extracted label information identifying each of the at least three extracted representative points. The position estimation unit is configured to estimate a position and orientation of the target based on the at least three extracted representative points and at least three reference representative points. The at least three reference representative points have a predefined correct positional relationship with each other and have reference label information identifying each of the at least three reference representative points. The position estimation unit is configured to estimate the position and orientation of the target by matching the at least three extracted representative points with the at least three reference representative points based on matching between the extracted label information of each of the at least three extracted representative points and the reference label information of each of the at least three reference representative points.

Accordingly, since the recognition device estimates the position and orientation of the target from the captured image data of the target, tasks such as selecting surfaces for each scene can be eliminated. Additionally, it is possible to determine the position and orientation of any location within the target. Furthermore, the position and orientation of the entire target can be estimated as long as at least three feature regions can be detected, thereby avoiding excessive computational load on neural networks and preventing a decline in estimation accuracy. Furthermore, since the surfaces of the target do not need to have a constant curvature, the present disclosure can be applied to targets having arbitrary shapes. For these reasons, the recognition device makes it possible to recognize the position and orientation of a wide variety of targets with high accuracy and stability.

A model generation device of the present disclosure is configured to generate a trained model to be used for estimating a position and orientation of a target from captured image data of the target. The model generation device includes a definition unit. The definition unit is configured to, in advance in target data showing the target, define: a feature region of the target; a reference representative point that is a representative point in the feature region; and reference label information identifying the feature region or the reference representative point.

Accordingly, the model generation device can generate a trained model capable of efficiently and accurately recognizing the position and orientation of the target by defining a feature region in the target data and predefining a reference representative point corresponding to the feature region. Furthermore, since the feature region and the reference point of the target are predefined in the trained model, the trained model enables highly accurate and robust position and orientation estimation, even when the shape or orientation of the target is complex.

A work system of the present disclosure includes the above-mentioned recognition device, and a work device configured to perform a predetermined work for the target recognized by the recognition device.

Accordingly, the above-mentioned recognition device improves the recognition accuracy and stability for the target, and as a result, the work performed by the work device can be carried out accurately and reliably.

### BRIEF DESCRIPTION OF DRAWINGS

FIG. 1 is a block diagram showing an example of the schematic configuration of a model generation device according to an embodiment.
FIG. 2 is a diagram showing an example of the hardware configuration of the model generation device according to the embodiment.
FIG. 3 is a diagram showing an example of a definition process executed by a definition unit in the model generation device according to the embodiment.
FIG. 4 is a diagram showing an example of manually defining feature regions in the model generation device according to the embodiment.
FIG. 5 is a diagram showing an example of automatically defining feature regions in the model generation device according to the embodiment.
FIG. 6 is a diagram showing an example of setting reference representative points by a representative point setting unit in the model generation device according to the embodiment.
FIG. 7 is a diagram showing an example of correct answer data set by the representative point setting unit in the model generation device according to the embodiment.
FIG. 8 is a diagram showing an example of a dataset generated by a dataset generation unit in the model generation device according to the embodiment.
FIG. 9 is a diagram showing an example of input and output in a training unit in the model generation device according to the embodiment.
FIG. 10 is a block diagram showing an example of the schematic configuration of a recognition device according to an embodiment.
FIG. 11 is a diagram showing an example of the hardware configuration of the recognition device according to the embodiment.
FIG. 12 is a diagram showing an example of input and output in a feature region detection unit in the recognition device according to the embodiment.
FIG. 13 illustrates an example of processing in the recognition device according to the embodiment, where (A) is a diagram showing an example in which confidence levels are assigned to extracted label information, (B) is a diagram showing an example in which feature regions are selected based on the confidence levels, and (C) is a diagram showing an example in which extracted representative points are extracted from the selected feature regions.
FIG. 14 is a diagram showing an example in which reference representative points and extracted representative points are matched in a position and orientation estimation processing unit in the recognition device according to the embodiment.
FIG. 15 is a diagram showing an example in which an input point cloud is determined based on feature regions in a precise estimation unit of the recognition device according to the embodiment.
FIG. 16 is a diagram showing an example in which an input point cloud is determined based on extracted label information in the precise estimation unit of the recognition device according to the embodiment.
FIG. 17 illustrates an example in which feature regions are detected by a feature region detection unit in the recognition device according to the embodiment, where (A) is a diagram showing an example in which four or more feature regions are detected, and (B) is a diagram showing an example in which a part of the feature regions are hidden by some object.
FIG. 18 is a diagram showing an example in which multiple groups of representative points are defined in the position estimation unit of the recognition device according to the embodiment.
FIG. 19 is a block diagram showing an example of the schematic configuration of a work system according to the embodiment.
FIG. 20 illustrates an example of processing in the definition unit of the recognition device according to the embodiment, where (A) is a diagram showing an example in which specific meanings are assigned among multiple pieces of reference label information, and (B) is a diagram showing an example in which a part of the feature regions of a target is hidden by another object.
FIG. 21 is a block diagram showing another example of the schematic configuration of the recognition device according to the embodiment.
FIG. 22 illustrates an example of processing in the grouping unit of the recognition device according to the embodiment, where (A) is a diagram showing the state before grouping, and (B) is a diagram showing the state after grouping.

### DESCRIPTION OF EMBODIMENTS

A model generation device, recognition device, and work system according to an embodiment will be described below with reference to the drawings. In each embodiment, identical components are denoted by the same reference numerals, and detailed explanations thereof may be omitted.

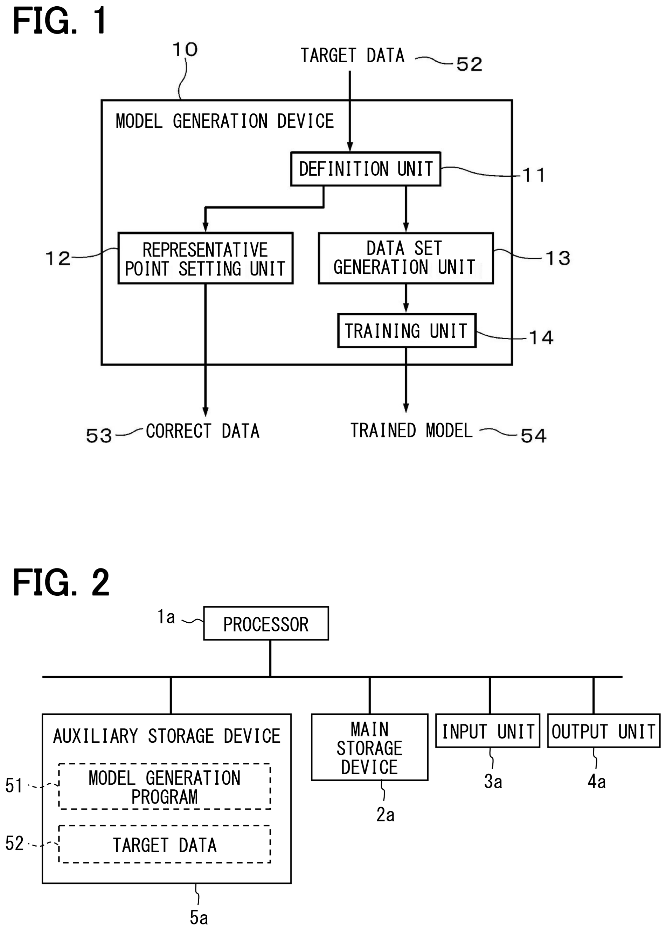

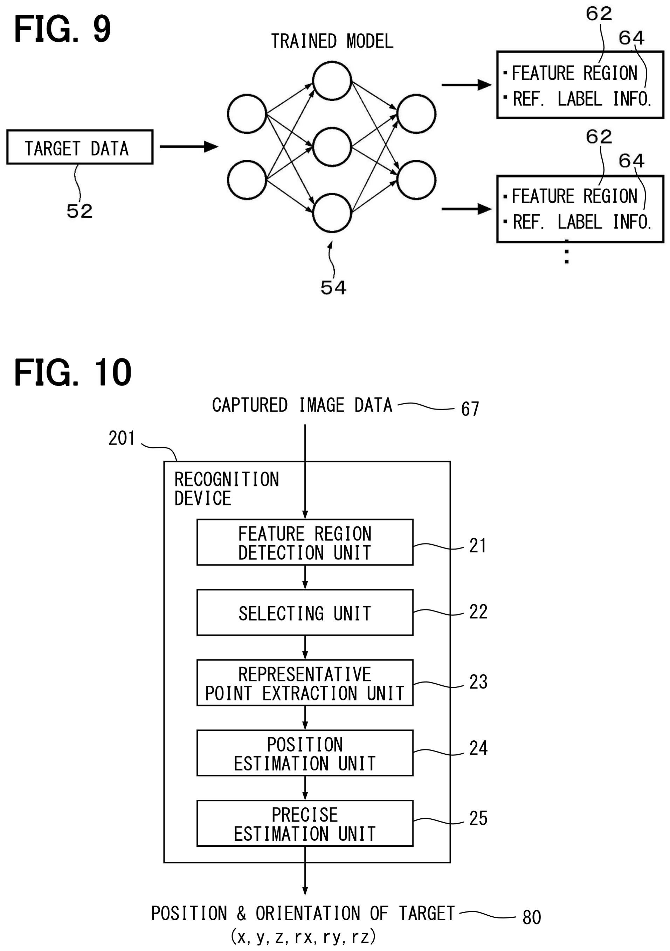

First, the model generation device 10 will be described. The model generation device 10 shown in FIG. 1 is, for example, a device for generating a trained model 54 to be used in a first recognition device 201 shown in FIG. 10. As shown in FIG. 1, the model generation device 10 includes a definition unit 11, a representative point setting unit 12, a dataset generation unit 13, and a training unit 14.

The model generation device 10 may be a dedicated computer, or may be realized by installing a model generation program 51 on a general-purpose personal computer or server. As shown in FIG. 2, the hardware configuration of the model generation device 10 includes a first processor 1a, a first main storage device 2a, a first input unit 3a, a first output unit 4a, and a first auxiliary storage device 5a. The first processor 1a may include a microcomputer such as a CPU, and performs arithmetic processing and other operations. The first main storage device 2a is composed of storage areas such as, for example, ROM, RAM, and rewritable flash memory.

The first input unit 3a is a user interface such as a mouse, keyboard, or touch panel, and receives input operations from the user. The first output unit 4a is a user interface such as a display, and presents various types of information to the user. In addition, the model generation device 10 can be configured to communicate with external computers via telecommunication lines such as the Internet or a LAN.

The first auxiliary storage device 5a stores a model generation program 51 and target data 52. The model generation program 51 is a computer program for causing the computer to execute processing to generate a trained model 54. That is, the model generation program 51 is a computer program for virtually implementing, on a computer, the definition unit 11, the representative point setting unit 12, the dataset generation unit 13, and the training unit 14 shown in FIG. 1. The model generation device 10 can virtually implement, on the computer, the definition unit 11, the representative point setting unit 12, the dataset generation unit 13, and the training unit 14, respectively, by having the first processor 1a read out the model generation program 51 from the first auxiliary storage device 5a, load it into the first main storage device 2a, and execute it.

That is, the definition unit 11, the representative point setting unit 12, the dataset generation unit 13, and the training unit 14 are configured as functional units that are virtually implemented by the first processor 1a executing the model generation program 51. It should be noted that the model generation device 10 may be configured so that the definition unit 11, the representative point setting unit 12, the dataset generation unit 13, and the training unit 14 shown in FIG. 1 are implemented on the same or shared hardware, or alternatively, on different hardware.

The first auxiliary storage device 5a is constituted by a tangible and non-transitory computer-readable medium. Examples of the first auxiliary storage device 5a include an HDD (Hard Disk Drive), SSD (Solid State Drive), magnetic disk, magneto-optical disk, CD-ROM (Compact Disc Read Only Memory), DVD-ROM (Digital Versatile Disc Read Only Memory), and semiconductor memory, but are not limited thereto. The first auxiliary storage device 5a may be an internal medium directly connected to the bus of the computer constituting the model generation device 10. Alternatively, the first auxiliary storage device 5a may be an external medium connected to the model generation device 10 via a telecommunication line such as the Internet or a LAN. In addition, when the model generation program 51 is delivered to the model generation device 10 via a telecommunication line, the definition unit 11, representative point setting unit 12, dataset generation unit 13, and training unit 14 are implemented by the model generation device 10, which has received the delivery, expanding and executing the model generation program 51 in the first main storage device 2a.

It should be noted that the implementation of the definition unit 11, representative point setting unit 12, dataset generation unit 13, and training unit 14 is not limited to the combination of the above-mentioned hardware and the model generation program 51. The implementation of the definition unit 11, representative point setting unit 12, dataset generation unit 13, and training unit 14 may be realized solely by hardware such as an integrated circuit in which the model generation program 51 is implemented, or some functions may be realized by dedicated hardware, with the remaining functions being realized by a combination of hardware and the model generation program 51.

The target data 52 is data for representing a recognition target on a computer. The target data 52 may be constituted by CAD data of the recognition target, and includes two-dimensional and three-dimensional information of the target. In the present embodiment, the target data 52 is stored in the first auxiliary storage device 5a. However, the model generation device 10 may acquire the target data 52 as needed from an external data server or the like. In the following description, the target represented on the computer based on the target data 52 may be referred to as a target model 521.

As shown in FIG. 1, the model generation device 10 receives the target data 52 as input for training data, and generates correct data 53 by sequentially executing processing in the definition unit 11 and the representative point setting unit 12. The target data 52 is a 3D model containing detailed shape information of the target, and the target data 52 may include information on all surface shapes of the target.

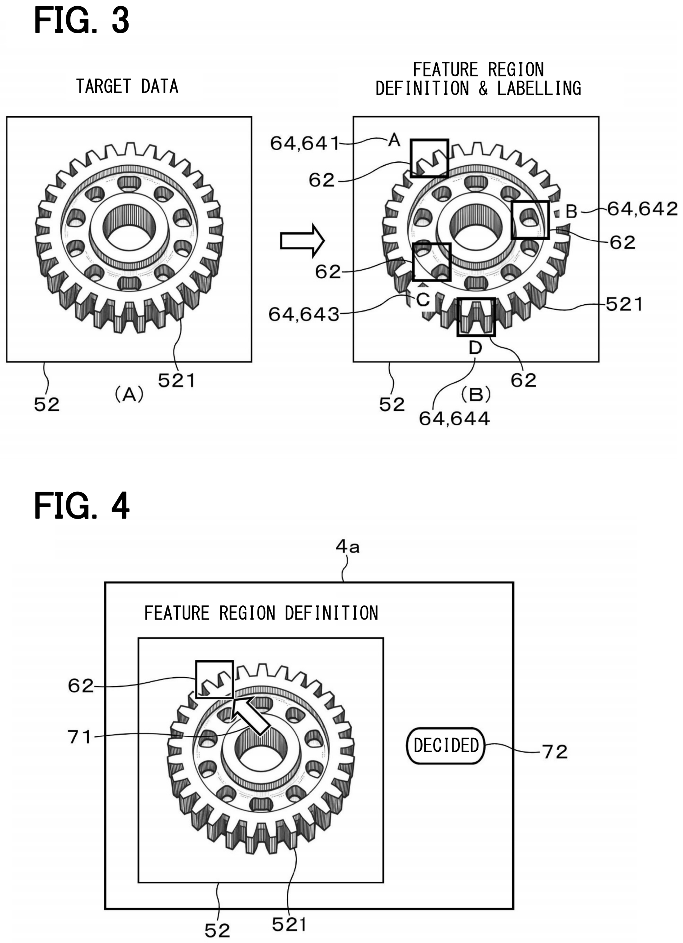

The definition unit 11 executes a definition process. The definition process includes defining at least three feature regions 62 of the target model 521, as shown in FIG. 3(B), from the target data 52 shown in FIG. 3(A). Each of the feature regions 62 may be a bounding box, which is a partial region of the target model 521 within an image or video. The feature regions 62 are regions arbitrarily selected as distinctive parts, such as a face, edge, or vertex of the target model 521.

The setting of the feature regions 62 may be performed manually by an operator using the first input unit 3a and the first output unit 4a. In this case, as shown in FIG. 4, the model generation device 10 may cause the first output unit 4a to display the target data 52 including the target model 521 displayed as a 3D image, along with a cursor 71 indicating the position for defining a feature region 62. That is, on the first output unit 4a, the target model 521 and the feature region 62 are visualized. The operator may operate the first input unit 3a to move the cursor 71 in the three-dimensional space including the target model 521, thereby specifying the position that is defined as the feature region 62. In this case, the operator can operate the first input unit 3a with viewing the target model 521 and the cursor 71 displayed on the first output unit 4a, to rotate the target model 521 displayed as a 3D image. After specifying the position, the operator can define the feature region 62 in the three-dimensional space including the target model 521 by selecting a decision button 72.

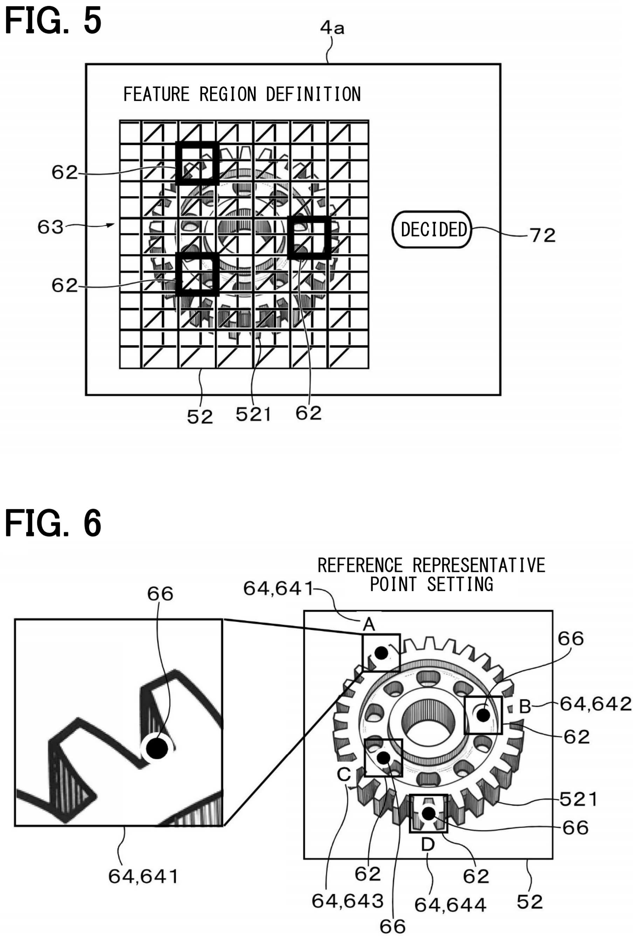

Additionally, the setting of the feature region 62 may be performed automatically, without relying on operations such as the cursor 71 by the operator as described above. In this case, as shown in FIG. 5 for example, the model generation device 10 divides the target model 521 into multiple voxels 63 in three-dimensional space, and executes processing to define at least three of the voxels 63 which are randomly selected, as the feature regions 62.

The definition process includes, as shown in FIG. 3(B), assigning reference label information 64 to the defined feature regions 62. The reference label information 64 is information used to identify the feature regions 62 when estimating the position and orientation using the trained model 54 later, and to indicate what kind of position and properties the feature regions 62 have. The reference label information 64 may include identification information uniquely identifying each defined feature region 62, such as a unique number or symbol assigned to each feature region 62. It should be noted that, in FIG. 3 and the like, for the sake of simplicity, the same reference numerals are assigned to each feature region 62 and each reference label information 64. However, when distinguishing between them in the explanation, they are referred to as first reference label information 641, second reference label information 642, third reference label information 643, and fourth reference label information 644.

The reference label information 64 may also include information indicating the type of the defined feature regions 62, such as "edge portion," "corner portion," or "plane portion". Furthermore, the reference label information 64 may include information indicating for what purpose the defined feature regions 62 are used or what kind of role the feature regions have. For example, in cases where the model generation device is used in a picking system, the reference label information 64 may include information indicating whether the defined feature region 62 is a graspable region or an ungraspable region. The assignment of the reference label information 64 may be performed manually by an operator or performed automatically based on three-dimensional CAD data of the target. It should be noted that, in the following description, the reference label information 64 assigned by the definition unit 11 may be referred to as the reference label information 64.

As shown in FIG. 1, the definition unit 11 outputs the defined feature regions 62 and the reference label information 64 to the representative point setting unit 12. The representative point setting unit 12 receives the feature regions 62 and the reference label information 64 from the definition unit 11 and executes a representative point setting process. The representative point setting process is a process, as shown in FIG. 6, of calculating a point in three-dimensional space that is representative of each of the feature regions 62 and setting the point as a reference representative point 66.

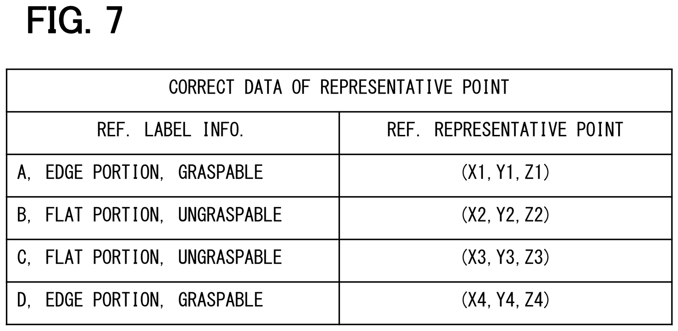

The reference representative point 66 has three-dimensional coordinate values of x, y, and z. The representative point setting unit 12 may set the center point or centroid of the defined feature region 62 as the reference representative point. The reference representative point 66 is, as shown in FIG. 7, associated with the reference label information 64 corresponding to the feature region 62 from which the reference representative point 66 is derived, and stored as correct data 53 having positional relationships.

Further, the model generation device 10, as shown in FIG. 1, receives input of the target data 52 as training data, and generates the trained model 54 by sequentially executing processes in the definition unit 11, dataset generation unit 13, and training unit 14. As shown in FIG. 1, the definition unit 11 outputs the defined feature regions 62 and the reference label information 64 to the dataset generation unit 13. The dataset generation unit 13 receives the feature regions 62 and the reference label information 64 from the definition unit 11, and executes a dataset generation process.

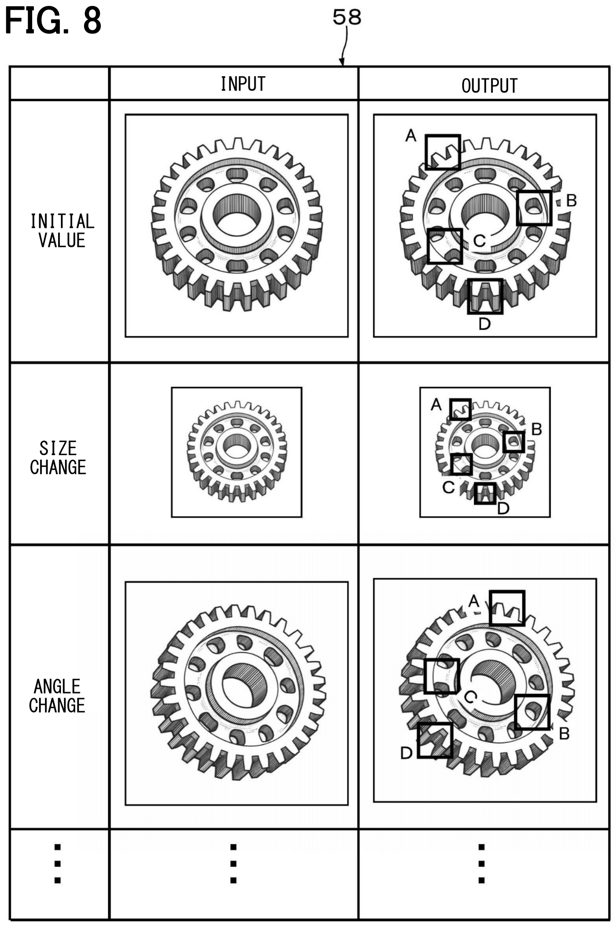

As shown in FIG. 8, the dataset generation process includes generating, as a dataset 58 for training, various 2D and 3D data with different appearances, such as different angles, sizes, and viewpoints, based on the target data 52, along with the feature regions 62 in those appearances and reference label information 64. The dataset generation unit 13 outputs the generated dataset 58 to the training unit 14. In this case, in FIG. 8, the "input" data refers to data that has been scaled and/or rotated based on the target data 52. Then, the "output" data is data that includes the feature regions 62 and reference label information 64 corresponding to the "input" data. It should be noted that, in the "output" of FIG. 8, the feature regions 62 and reference label information 64 are not indicated by reference numerals. However, the labels "A," "B," "C," and "D" represent the reference label information, and the bold-outlined, boxed areas located near each reference label indicate the feature regions.

The training unit 14 outputs the trained model 54 by performing training using the dataset 58 received from the dataset generation unit 13. As shown in FIG. 9, the trained model is a neural network that inputs 2D and 3D data of various angles and postures based on the target data 52, and outputs the feature regions 62 and reference label information 64 corresponding to those angles and postures.

In this manner, the model generation device 10 of the present disclosure generates the trained model 54 to be used for recognizing the position and orientation of a target. The model generation device 10 includes the definition unit 11. The definition unit 11 preliminarily defines, for the target data 52, feature regions 62 and a reference representative point 66 corresponding to each of the feature regions 62.

Accordingly, the model generation device 10 can generate the trained model 54 configured to recognize the position and orientation of a target efficiently and with high accuracy by defining feature regions 62 for the target data 52 and preliminarily defining a reference representative point 66 corresponding to each of the feature regions 62. Moreover, the feature regions 62 of the target and the reference representative points 66 are predefined in the trained model 54, enabling highly accurate and robust position and orientation estimation, even when the shape or orientation of the target is complex.

In addition, the definition unit 11 divides the target data 52 into multiple voxels 63 in a three-dimensional space, and defines the feature regions 62 by randomly selecting voxels 63. Accordingly, by defining the feature regions 62 randomly, the task of defining the feature regions 62 can be automated, thereby reducing the amount of manual work required. Furthermore, dividing the target data 52 into voxels 63 in three-dimensional space and randomly selecting the voxels 63 makes it possible to automate the definition of the feature regions 62 with a simple configuration.

Additionally, the definition unit 11 may be configured to define the feature regions 62 using markers that are attached onto the actual target. In this case, the marker may be a writing instrument with ink. Then, the operator marks the locations to be defined as the feature regions 62 on the target using a marker of a color different from that of the target. The model generation device 10 captures an image of the target marked with the marker, for example, using a camera. Then, the model generation device 10 acquires the captured image data of the target as target data 52, recognizes the regions in the target data where the marker is present, and defines that regions as the feature regions 62.

Accordingly, the feature regions 62 can be easily identified with the naked eye and also readily detected. Thus, the definition of the feature regions 62 can be simplified, and the burden on the operator required to define the feature regions 62 can be reduced.

Next, with reference to FIGS. 10 to 18, the first recognition device 201 will be described. The first recognition device 201 is an example of a recognition device, and is a device configured to recognize the position and orientation of a target using the trained model 54 generated by the above-described model generation device 10. As shown in FIG. 10, the first recognition device 201 includes a feature region detection unit 21, a selecting unit 22, a representative point extraction unit 23, a position estimation unit 24, and a precise estimation unit 25.

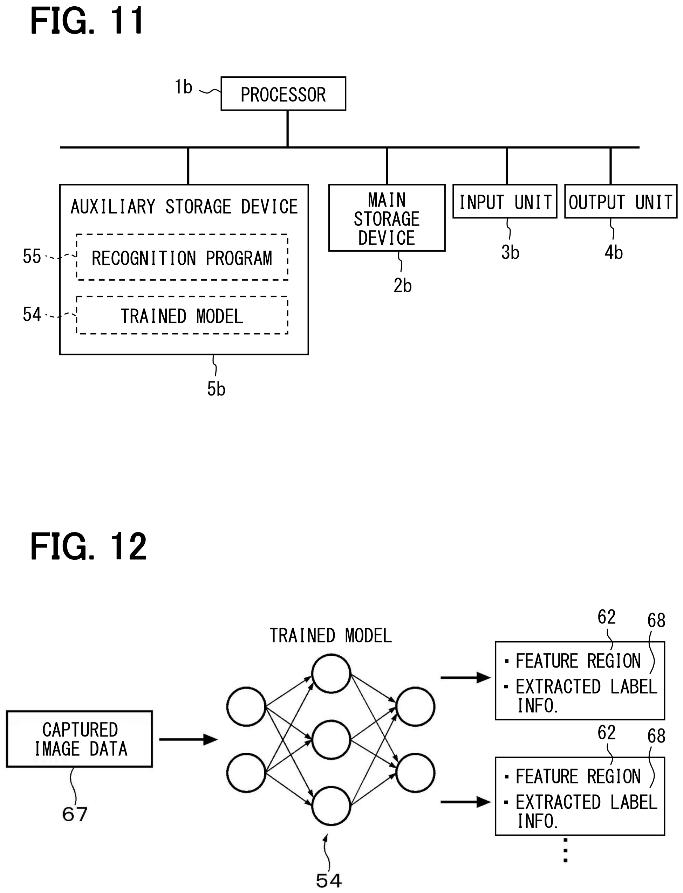

The first recognition device 201 may be a dedicated computer, or may be implemented by installing a recognition program 55 on a general-purpose personal computer or server. The first recognition device 201 may be the same computer as the model generation device 10, or may be a different computer. As shown in FIG. 11, the hardware configuration of the first recognition device 201, like that of the model generation device 10, includes a second processor 1b, a second main storage device 2b, a second input unit 3b, a second output unit 4b, and a second auxiliary storage device 5b. Since the second processor 1b, second main storage device 2b, second input unit 3b, second output unit 4b, and second auxiliary storage device 5b have the same or a common configuration as the first processor 1a, first main storage device 2a, first input unit 3a, first output unit 4a, and first auxiliary storage device 5a of the model generation device 10, a detailed description of each configuration will be omitted. The first recognition device 201 may be configured to communicate with an external computer via a telecommunication line such as the Internet or a LAN.

The second auxiliary storage device 5b of the first recognition device 201 stores the trained model 54 generated by the model generation device 10 and a recognition program 55. The recognition program 55 is a program that causes the computer to perform processing of recognizing the position and orientation of a target using the trained model 54. That is, the recognition program 55 is a computer program for virtually realizing, on a computer, the feature region detection unit 21, selecting unit 22, representative point extraction unit 23, position estimation unit 24, and precise estimation unit 25 shown in FIG. 10. The first recognition device 201 virtually realizes the feature region detection unit 21, selecting unit 22, representative point extraction unit 23, position estimation unit 24, and precise estimation unit 25 on a computer, respectively, by having the second processor 1b read the recognition program 55 from the second auxiliary storage device 5b, load it into the second main storage device 2b, and execute it.

That is, the feature region detection unit 21, selecting unit 22, representative point extraction unit 23, position estimation unit 24, and precise estimation unit 25 are configured as functional units that are virtually realized by the second processor 1b executing the recognition program 55. It should be noted that the first recognition device 201 may be configured so that the feature region detection unit 21, selecting unit 22, representative point extraction unit 23, position estimation unit 24, and precise estimation unit 25 shown in FIG. 10 are implemented on the same or shared hardware, or alternatively, on different hardware.

The second auxiliary storage device 5b, like the first auxiliary storage device 5a of the model generation device 10, is constituted by a tangible and non-transitory computer-readable medium. Examples of the second auxiliary storage device 5b include a hard disk drive (HDD), solid state drive (SSD), magnetic disk, magneto-optical disk, CD-ROM (Compact Disc Read Only Memory), DVD-ROM (Digital Versatile Disc Read Only Memory), and semiconductor memory, but are not limited thereto. The second auxiliary storage device 5b may be an internal medium directly connected to the bus of the computer constituting the first recognition device 201, or may be an external medium connected to the first recognition device 201 via a telecommunications line such as the Internet or a LAN. Furthermore, when the recognition program 55 is delivered to the first recognition device 201 via a telecommunications line, the feature region detection unit 21, selecting unit 22, representative point extraction unit 23, position estimation unit 24, and precise estimation unit 25 are implemented by the first recognition device 201, which has received the delivery, expanding and executing the delivered recognition program 55 in the second main storage device 2b.

It should be noted that the implementation of the feature region detection unit 21, selecting unit 22, representative point extraction unit 23, position estimation unit 24, and precise estimation unit 25 is not limited to the above-mentioned combination of hardware and the recognition program 55. The implementation of the feature region detection unit 21, selecting unit 22, representative point extraction unit 23, position estimation unit 24, and precise estimation unit 25 may be realized by hardware alone, such as an integrated circuit in which the recognition program 55 is implemented. Alternatively, some functions may be implemented by dedicated hardware, while the remainder may be realized by a combination of hardware and the recognition program 55.

As shown in FIG. 10, the first recognition device 201 receives image data 67 of a target as input and outputs the position and orientation 80 of the target by sequentially executing processing in the feature region detection unit 21, selecting unit 22, representative point extraction unit 23, position estimation unit 24, and precise estimation unit 25. The image data 67 of the target is obtained by capturing a real target using a sensor such as a camera, depth sensor, or LiDAR (Light Detection And Ranging). The image data 67 includes three-dimensional positional information of the surface of the target. The image data 67 may be composed of two-dimensional RGB image data or video data, or depth image data or video data. In the following description, the image data 67 will be described as image data. However, this does not exclude video data.

The feature region detection unit 21 executes a feature region detection process. The feature region detection process includes detecting and outputting at least three feature regions 62 of the target based on the image data 67 of the target. As shown in FIG. 12, the feature region detection unit 21 executes a process of detecting the feature regions 62 by inference using the trained model 54. The feature region detection unit 21 inputs the image data 67 into the trained model 54 and obtains, as output values, multiple feature regions 62 and extracted label information 68 corresponding to the feature regions 62.

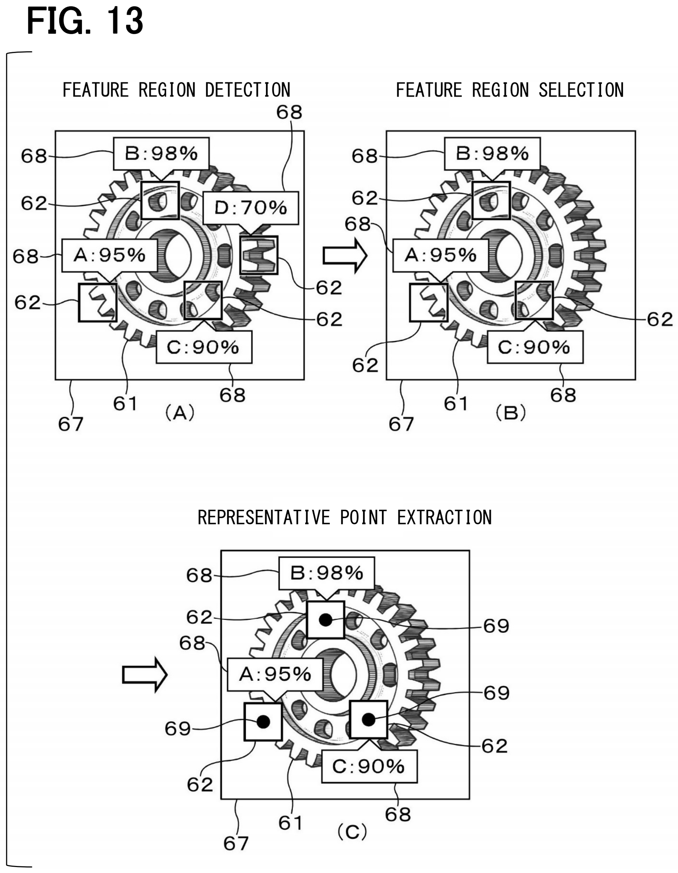

As shown in FIG. 13(A), the feature region detection unit 21 may assign a confidence level to the extracted label information 68 that has been detected. The information displayed as 95%, 98%, 90%, and 70% in FIG. 13 represents the confidence levels. The confidence level is an index indicating the accuracy of the detected feature regions 62, and may be expressed as a multi-level rank or as a percentage. The higher the confidence level, the greater the likelihood that the feature region 62 is correct. The feature region detection unit 21 outputs the feature regions 62 obtained through the feature region detection process, along with the extracted label information 68, to the selecting unit 22.

The selecting unit 22 selects the feature regions 62 and the extracted label information 68 with higher reliability from among those received from the feature region detection unit 21, and outputs the selected feature regions with the extracted label information 68 to the representative point extraction unit 23. For example, the selecting unit 22 selects a predetermined number (three or more) of feature regions 62 in order of highest to lowest confidence level in the extracted label information 68. In the example of FIG. 13, as shown in (A) and (B), three feature regions with the highest confidence levels are selected from among the four feature regions 62. That is, in this case, the feature regions 62 having extracted label information 68 of "A: 95%," "B: 98%," and "C: 90%" are selected Then, the selecting unit 22 outputs the three selected feature regions 62 and the extracted label information 68 corresponding to the feature regions 62, together with the image data 67, to the representative point extraction unit 23. For example, when the feature region detection unit 21 detects five or more feature regions 62, the selecting unit 22 may output four or more feature regions 62 and the extracted label information 68 corresponding to the feature regions 62, together with the image data 67, to the representative point extraction unit 23.

The representative point extraction unit 23 executes a representative point extraction process. The representative point extraction process includes calculating extracted representative points 69 from the image data 67 and the feature regions 62 received from the selecting unit 22. For example, when the image data 67 is a depth image, the image data 67 includes a point cloud having three-dimensional position information. The representative point extraction unit 23 extracts the point cloud contained within each of the feature regions 62 from the image data 67, and calculates the extracted representative point 69 as a representative point of each of the feature regions 62 by computing the mean value or median value of the point cloud. That is, the extracted representative point 69 is a representative point that represents the feature region 62.

As shown in FIG. 13(C), the representative point extraction process includes extracting at least three calculated extracted representative points 69 and extracted label information 68 identifying the extracted representative points 69. In this embodiment, since the three feature regions 62 selected by the selecting unit 22 are input to the representative point extraction unit 23, the representative point extraction unit 23 outputs the three extracted representative points 69 which are the representative points of the three feature regions 62.

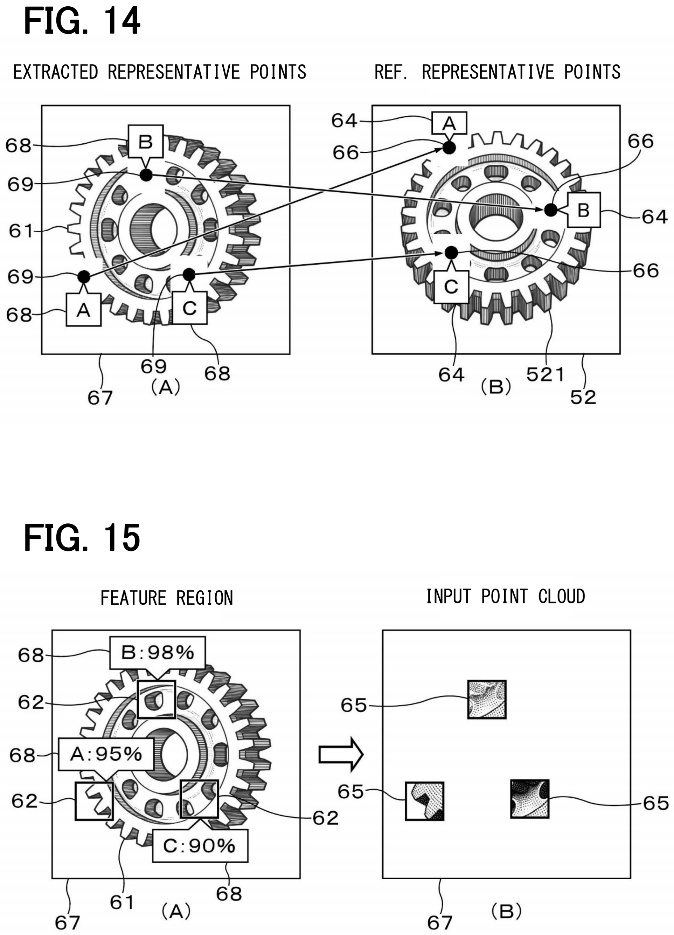

The position estimation unit 24 executes a position and orientation estimation process. As shown in FIG. 14, the position and orientation estimation process includes estimating the position and orientation of the target 61 captured in the image data 67 by matching the extracted label information 68 of the extracted representative points 69, which are extracted from the image data 67, with the reference label information 64 of the reference representative points 66, which are predefined by the model generation device 10. In this case, the extracted label information 68 shown in FIG. 14(A) corresponds to each extracted representative point 69 extracted by the representative point extraction unit 23. The reference label information 64 shown in FIG. 14(B) is used to identify at least three reference representative points 66 having correct positional relationship with each other that is predefined by the model generation device 10.

That is, the position estimation unit 24 estimates the position and orientation of the target by using the positional relationship of the extracted representative points 69 and the positional relationship of the reference representative points 66. In this case, the position estimation unit 24 may determine pairs in which the extracted label information 68 and the reference label information 64 match, and then calculate the translation and rotation required for alignment between the extracted representative points 69 and the reference representative points 66 based on the covariance matrix created from the coordinate values of the extracted representative points 69 and the reference representative points 66 in the pairs. As shown in FIG. 10, the position estimation unit 24 outputs the position and orientation 80 of the target 61, obtained by the estimation process, as values in a six-degree-of-freedom coordinate system, for example.

Here, conventional target recognition and position estimation technologies have the following issues. For example, in methods that require prior information regarding the types of surfaces on which feature regions are to be detected, if there are multiple options within the target, effort of selecting the appropriate surface for each scene is required. Furthermore, the only result of this method is the equation of the surface, and it is impossible to determine where the target is located within the coordinate system. Furthermore, if a pointed region is facing toward the camera or sensor, it may not be possible to sufficiently obtain the required feature regions.

For another example, in methods that use an end-to-end neural network that inputs point cloud and outputs the position of the target, the computational load on the neural network is high, and the estimation accuracy may decrease. In addition, even with rule-based estimation methods, it has been confirmed that if the compatibility between the features and the shape of the target is poor, the estimation accuracy deteriorates.

In contrast, the first recognition device 201 of the present disclosure includes the feature region detection unit 21, the representative point extraction unit 23, and the position estimation unit 24. The feature region detection unit 21 detects at least three feature regions 62 of the target 61 from the image data 67 obtained by capturing an image of the target 61. The representative point extraction unit 23 calculates extracted representative points 69 from the image data 67 and the feature regions 62, and extracts at least three extracted representative points 69 and extracted label information 68 for identifying each of the extracted representative points 69. Then, the position estimation unit 24 estimates the position and orientation of the target 61 by matching the extracted representative points 69 with the reference representative points 66 based on matching between the extracted label information 68 corresponding to the extracted representative points 69 and the reference label information 64 identifying the at least three reference representative points 66 having the predefined correct positional relationship.

Thus, tasks such as selecting surfaces for each scene are not needed, and the position of any location of the target 61 can be determined since the first recognition device 201 estimates the position and orientation of the target 61 itself from the image data of the target 61. Moreover, the position and the orientation of the entire target 61 can be estimated by detecting at least three feature regions 62. Thus, it is possible to avoid excessive computational load on the neural network and prevent a decrease in estimation accuracy. Furthermore, the target may be any shape since the surface of the target 61 does not necessarily have a constant curvature. For these reasons, the first recognition device 201 makes it possible to recognize the positions and orientations of a wide variety of targets 61 with high accuracy and stability.

In addition, the feature region detection unit 21 detects the feature regions 62 by inference using the trained model 54. According to this, the feature regions 62 can be detected robustly and with high accuracy, thereby improving the recognition accuracy of the position and orientation of the target.

In addition, the image data 67 is a depth image. Accordingly, a depth image having three-dimensional position information as the image data 67 is less susceptible to the effects of light compared to RGB images. Thus, feature regions can be detected more robustly even in bright or dark environments, thereby further improving the recognition accuracy of the position and orientation of the target.

Here, the first recognition device 201 can estimate the position and orientation of the target 61 with relatively high accuracy, even based on the output from the position estimation unit 24. Furthermore, the first recognition device 201 can estimate the position and orientation of the target 61 with even higher accuracy when equipped with a precise estimation unit 25. In this embodiment, the position estimation unit 24 outputs the position and orientation of the target 61, which is determined through the estimation process, to the precise estimation unit 25. Then, the precise estimation unit 25 inputs the estimation result from the position estimation unit 24 and performs position estimation with higher accuracy than the position estimation unit 24.

The precise estimation unit 25 executes a precise estimation process. The precise estimation process is a position and orientation estimation with higher accuracy than that by the position estimation unit 24. The precise estimation process may include using the estimation result of the position estimation unit 24 as the initial position and orientation. The precise estimation process may further includes improving the accuracy of the position and orientation based on the initial position and orientation by repeatedly performing position alignment, by applying methods such as the ICP (Iterative Closest Point) algorithm, to match the 3D point cloud of the target with the point cloud of the trained model 54.

The precise estimation unit 25 may use only the feature regions 62 detected by the feature region detection unit 21, specifically only the feature regions 62 selected by the selecting unit 22, as the input point cloud input to the precise estimation unit 25, and more specifically, the point cloud input to the ICP. That is, as shown in FIG. 15, the precise estimation unit 25 extracts a point cloud corresponding to the feature regions 62 from the 3D point cloud data of the captured image based on the feature regions 62 selected by the selecting unit 22, and uses the extracted point cloud as the input point cloud 65 to be provided to the ICP.

In general, it is preferable to input the point cloud of the entire object into the ICP algorithm. However, for example, when there are multiple objects with the same shape in the captured image data, it is difficult to accurately extract only the point cloud of the target to be recognized. Using the point cloud extracted from the detected feature region 62 as the input point cloud 65 to be provided to the ICP makes it possible to remove noise and perform highly accurate precision estimation even such a situation.

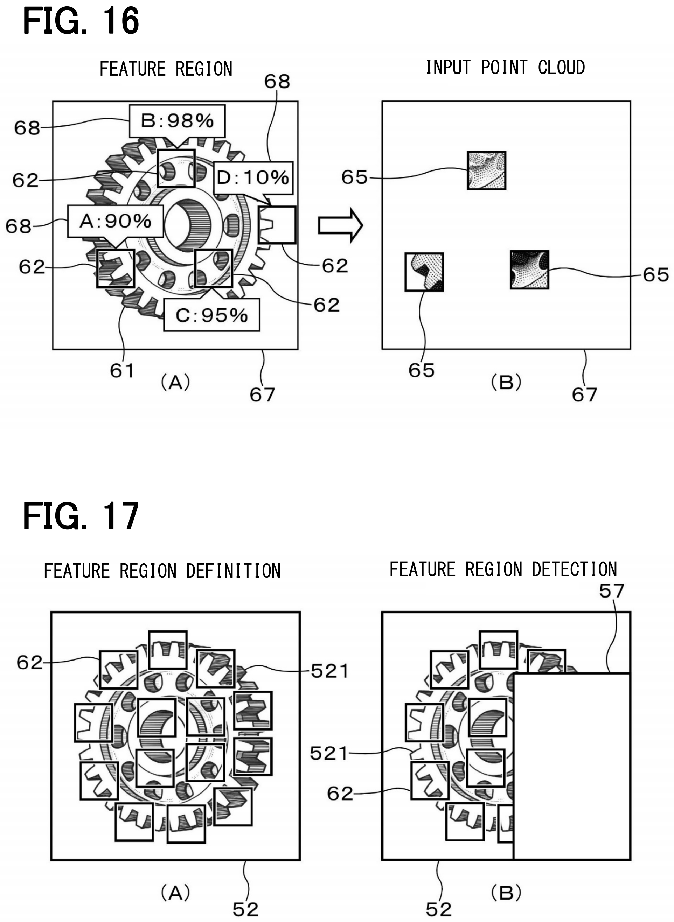

In addition, as shown in FIG. 16, the precise estimation unit 25 may determine the input point cloud 65 based on the extracted label information 68 of the feature regions 62 detected by the feature region detection unit 21. For example, as shown in FIG. 16(A), when there is a feature region 62 whose confidence is extremely low compared to the other feature regions 62 among the feature regions 62 detected by the feature region detection unit 21, it is estimated that the feature region 62 with low confidence is located on the back side, which is difficult to capture with the camera or sensor, while the feature regions 62 with high confidence are located on the front side, which are easy to capture with the camera or sensor. In this case, as shown in FIG. 16(B), the precise estimation unit 25 excludes the feature region 62 whose confidence is lower than a predetermined threshold, and extracts the point clouds of the remaining feature regions 62 and use them as the input point cloud for input to the ICP. Excluding point clouds with low confidence can reduce noise, and consequently, lead to more accurate precision estimation.

Here, the feature region detection unit 21 may be configured to detect four or more feature regions 62. In this case, the model generation device 10 also generates the trained model 54 using four or more feature regions 62, as shown in FIG. 17(A). For example, as shown in FIG. 17(B), even if some of the feature regions 62 in the image data 67 are obscured by some object 57, the first recognition device 201 can perform the position and orientation estimation process and precision estimation process using other feature regions 62 visible in the image data 67. As a result, the robustness of position and posture recognition of the target can be enhanced.

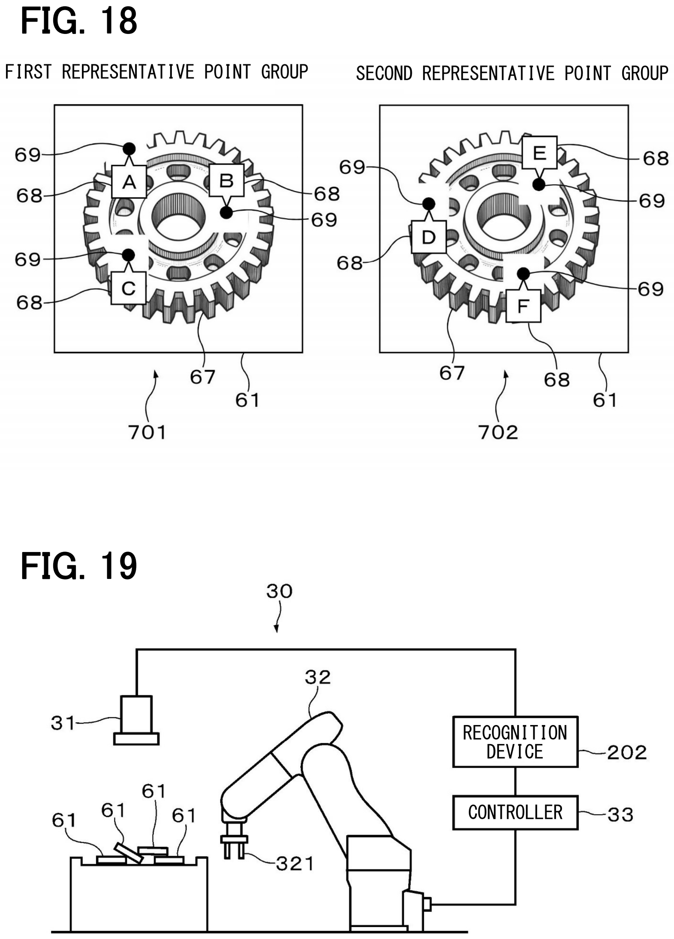

Further, as shown in FIG. 18, the position estimation unit 24 may define multiple representative point groups, each consisting of at least three or more extracted representative points as a single group, estimate the position and orientation for each representative point group, and execute a process to determine the final position and orientation using the information of the multiple estimated positions and orientations.

In this case, the model generation device 10 generates a trained model 54 that detects a large number of feature regions 62. The feature region detection unit 21 detects a large number of feature regions based on the trained model 54. Then, the position estimation unit 24 defines representative point groups, each having three extracted representative points 69 selected from the large number of extracted representative points obtained from the feature regions 62. For example, as shown in FIG. 18, the representative point groups are a first representative point group 701 and a second representative point group 702.

Then, for example, the position estimation unit 24 determines the final estimated value of the position and orientation by discretizing and voting on the multiple estimation results of the position and orientation obtained from the representative point groups. In the example of FIG. 18, the position estimation unit 24 determines the final estimated value from the estimation results obtained from the first representative point group 701 and the second representative point group 702. Accordingly, even if the detection of one feature region 62 fails, position estimation can still be performed using the detection of other feature regions 62, resulting in greater robustness and a reduced probability of recognition failure.

Next, with reference to FIGS. 19 to 22, the work system 30 and a second recognition device 202 for the work system will be described. As shown in FIG. 19, the work system 30 includes the second recognition device 202, an imaging device 31, a work device 32, and a controller 33. The work device 32 is a device that performs predetermined operations on the target 61 recognized by the second recognition device 202.

The imaging device 31 captures images of the target 61 and acquires image data 67 used by the second recognition device 202. The imaging device 31 is formed of, for example, an RGB camera or a depth camera, and captures still images or videos of the target 61 at predetermined intervals. The work system 30 may be equipped with multiple types of imaging devices 31. The imaging device 31 outputs the image data 67 of the target 61 to the second recognition device 202.

The work device 32 is, for example, an articulated robot and includes a working unit 321 that performs operations on the target 61. The work device 32 may grasp, move, and place any selected target 61 from multiple targets 61. In this case, the working unit 321 may be configured as a chuck capable of gripping parts or similar items. That is, the work device 32 may be configured as a picking device that picks any selected target 61 from multiple targets 61 by gripping the selected target 61 with the working unit 321. In this case, the region of the target 61 that is gripped by the working unit 321 is referred to as the "work portion." The controller 33 receives information on the position and orientation of the target 61 from the second recognition device 202 and controls the operation of the work device 32.

Here, in so-called bulk picking situations where multiple targets 61 having the same shape are to be picked, the multiple targets 61 appear in the captured image data 67. Thus, the feature region detection unit 21 detects similar feature regions 62 from each of the multiple targets 61. However, in order for the position estimation unit 24 to estimate the position and orientation of each target 61, it is necessary to group the feature regions 62 for each target 61 and to determine the target object for position and orientation estimation.

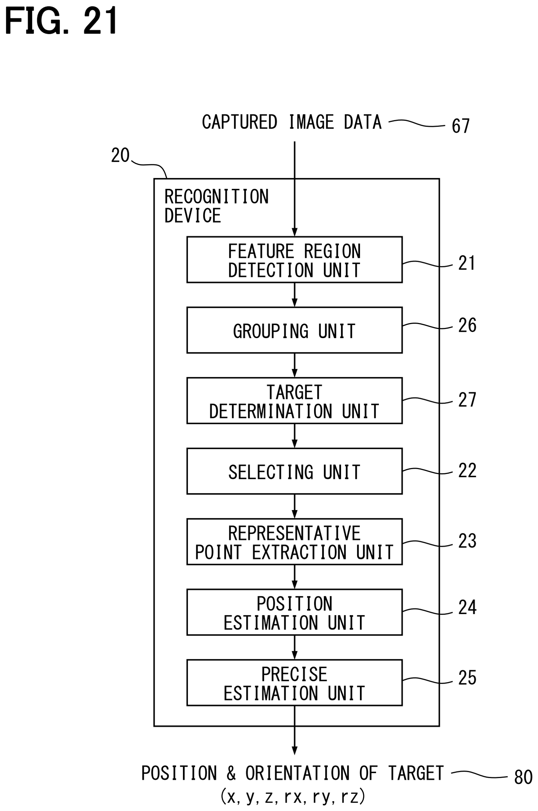

Thus, as shown in FIG. 21, the second recognition device 202 further includes a grouping unit 26 and a target determination unit 27 as well as the feature region detection unit 21, selecting unit 22, representative point extraction unit 23, position estimation unit 24, and precise estimation unit 25. The feature region detection unit 21, selecting unit 22, representative point extraction unit 23, position estimation unit 24, and precise estimation unit 25 have the same configuration as those of the first recognition device 201 described above, and thus, detailed explanation is omitted. In this case, the recognition program 55 implements the grouping unit 26 and the target determination unit 27 as well as the feature region detection unit 21, selecting unit 22, representative point extraction unit 23, position estimation unit 24, and precise estimation unit 25.

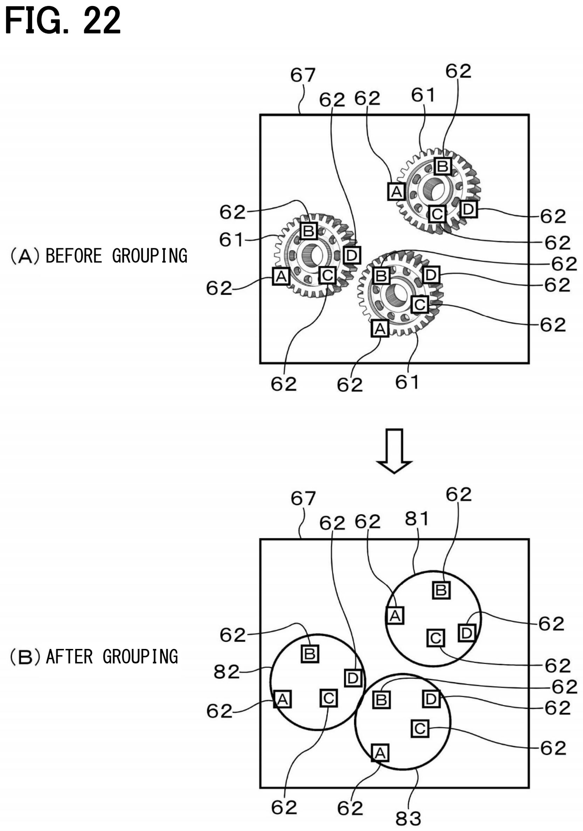

The grouping unit 26 executes a grouping process. As shown in FIG. 22, the grouping process groups the multiple feature regions 62 detected by the feature region detection unit 21 into groups belonging to respective targets 61, such as a first group 81, a second group 82, and a third group 83. The grouping unit 26 may perform grouping using a neural network or by using information on the distances between the feature regions 62.

For example, when the feature regions 62 are defined by the definition unit 11, the information on the distances between the feature regions 62 possessed by the trained model 54 is already known. The grouping unit 26 can group the feature regions 62 that are detected from the image data 67 and that have the positional relationship that is closest to the positional relationship of the feature regions 62 of the trained model 54. Accordingly, even if the regions of the objects 61 are not separated by instance segmentation or the like, it is possible to associate the detected feature regions 62 with each of the objects 61.

In addition, the grouping unit 26 may perform grouping based on information obtained by segmenting the captured image data 67 at the pixel level. That is, the grouping unit 26 associates each pixel of the captured image data 67 with a label or category indicating what is depicted, and groups the feature regions 62 based on the information. Using information segmented for each object enables highly reliable grouping.

The target determination unit 27 executes a determination process. The determination process includes processing of determining a target for which position and orientation is estimated among the objects 6, based on the detection results from the feature region detection unit 21. That is, the target determination unit 27 determines the target 61 on which the work device 32 will perform an operation. The target determination unit 27 uses the detection results from the feature region detection unit 21 to preferentially recognize the target 61 in which a greater number of feature regions 62 have been detected. Since work is performed starting with objects whose positions and orientations have been reliably recognized, the success rate of operations by the work system 30 can be increased.

Here, the definition unit 11 of the model generation device 10 may define a line or surface with a specific meaning by using a combination of two or more feature regions 62. Each feature region 62 has reference label information 64. The assignment of meaning to combinations of the reference label information 64 can be useful for a work system employing the first recognition device 201, which will be described later.

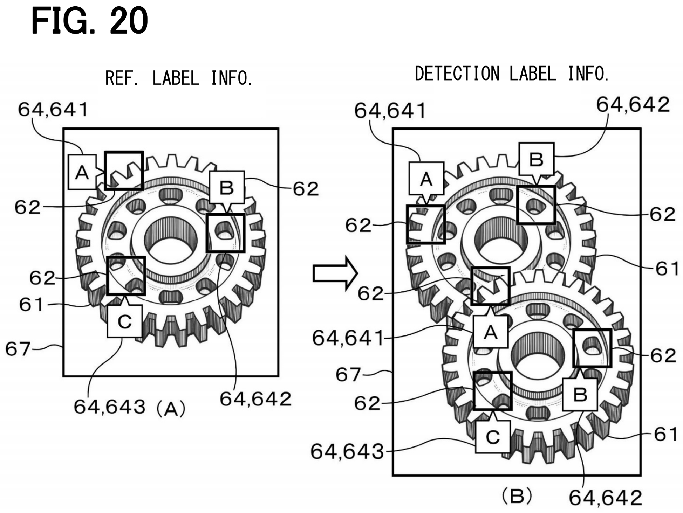

For example, as shown in FIG. 20(A), the definition unit 11 defines the positional relationship of three pieces of reference label information 64 (a first reference label information 641, a second reference label information 642, and a third reference label information 643) as a plane. If the number of the information (i.e., first reference label information 641, second reference label information 642, and third reference label information 643) does not match between the reference label information and the extracted label information, it can be estimated that the feature region in the extracted label information is hidden from view by another object or the like. For example, in FIG. 20(B), while two regions are detected for each of the first reference label information 641 and second reference label information 642 in FIG. 20(B), only one region is detected for the third reference label information 643. Thus, it can be estimated that the feature region belonging to the third reference label information 643 is hidden from view by another object or the like. This can be utilized in the work system, for example, to determine the order of operations.

In addition, the reference label information 64 of the feature region 62 includes information as to whether the feature region 62 is a work portion on which the work device 32 of the work system 30 performs an operation, that is, whether it is a grippable portion of the target 61 to be grasped by the working unit 321. For example, as shown in FIG. 7, each reference label information 64 of the feature region 62 is provided with information indicating "graspable" if the corresponding feature region 62 is a graspable portion, and with information indicating "ungraspable" if it is not a graspable portion. The first recognition device 201 and the second recognition device 202 can determine whether the detected feature region 62 is a work target portion or not, based on the extracted label information 68 of the feature region 62. Then, when the first recognition device 201 and the second recognition device 202 detect a feature region 62 that has information indicating it is a work target portion, they can determine that the work target portion is visible. Accordingly, the work system 30 can determine, based on the extracted label information 68 of the detected feature region 62, whether the work portion is visible, that is, whether work can be performed on the work portion. This information can be used as a criterion for deciding whether the recognized object should be selected as a picking target.

### (Other Embodiments)

It should be noted that the present disclosure is not limited to the embodiments described above and shown in the drawings, but may be arbitrarily modified, combined, or extended without departing from the gist thereof. The numerical values and the like shown in the above embodiments are merely examples and are not limited thereto.

The present disclosure has been described in accordance with embodiments, but it is understood that the present disclosure is not limited to such embodiments or structures. The present disclosure also encompasses various modifications and variations within the scope of equivalents. In addition, various combinations and forms, as well as other combinations or forms including more, less, or only a single element, also fall within the scope and spirit of the present disclosure.

The controller and its methods described in the present disclosure may be implemented by a dedicated computer provided by configuring a general-purpose processor and memory programmed to execute one or more functions embodied by a computer program. Alternatively, the controller and its methods described in the present disclosure may be implemented by a dedicated computer provided by configuring a processor with one or more dedicated hardware logic circuits. Alternatively, the controller and its methods described in the present disclosure may be implemented by one or more dedicated computers configured by a combination of a processor and memory programmed to execute one or more functions and a processor configured with one or more hardware logic circuits. Furthermore, the computer program may be stored as instructions executable by a computer on a computer-readable, non-transitory, tangible recording medium.

The present disclosure includes the following aspects.
[1] A recognition device includes a feature region detection unit, a representative point extraction unit, and a position estimation unit. The feature region detection unit is configured to detect at least three feature regions of a target from captured image data of the target. The representative point extraction unit is configured to calculate at least three extracted representative points from the at least three feature regions and the captured image data, and extract extracted label information identifying each of the at least three extracted representative points. The position estimation unit is configured to estimate a position and orientation of the target based on the at least three extracted representative points and at least three reference representative points. The at least three reference representative points have a predefined correct positional relationship with each other and have reference label information identifying each of the at least three reference representative points. The position estimation unit is configured to estimate the position and orientation of the target by matching the at least three extracted representative points with the at least three reference representative points based on matching between the extracted label information of each of the at least three extracted representative points and the reference label information of each of the at least three reference representative points.
[2] In the recognition device of [1], the feature region detection unit is configured to detect the at least three feature regions by inference using a trained model.
[3] In the recognition device of [1] or [2], the captured image data is a depth image.
[4] The recognition device of any one of [1] to [3] includes a precise estimation unit configured to estimate the position and orientation of the target more precisely than the position estimation unit. The precise estimation unit is configured to input an estimation result created by the position estimation unit.
[5] In the recognition device of [4], the precise estimation unit is configured to use only the at least three feature regions detected by the feature region detection unit as input point clouds.
[6] In the recognition device of [4] or [5], the precise estimation unit is configured to determine input point clouds based on the extracted label information of the at least three feature regions that are detected by the feature region detection unit.
[7] In the recognition device of any one of [1] to [6], the feature region detection unit is configured to detect at least four feature regions.
[8] In the recognition device of [7], the position estimation unit is configured to define representative point groups each of which includes the at least three extracted representative points, estimate the position and orientation of the target for each of the representative point groups, and determine a final position and orientation of the target using the estimated position and orientation from each of the representative point groups.
[9] In the recognition device of any one of [1] to [8], the target is one of targes, and the captured image data includes the targets. The recognition device further includes a grouping unit configured to classify feature regions detected by the feature region detection unit, including the at least three feature regions, into groups associated with the respective targets.
[10] In the recognition device of [9], the grouping unit is configured to classify the feature regions using information obtained by segmentation of the targets on a pixel basis.
[11] In the recognition device of any one of [1] to [10], the target is one of targets, and the captured image data includes the targets. The recognition device further includes a target determination unit configured to determine a target for which the position and orientation is estimated among the targets, using a detection result of the feature region detection unit.
[12] A model generation device is configured to generate a trained model to be used for estimating a position and orientation of a target from captured image data of the target. The model generation device includes a definition unit configured to, in advance in a target data showing the target, define: a feature region of the target, a reference representative point that is a representative point in the feature region, and reference label information identifying the feature region or the reference representative point.
[13] In the model generation device of [12], the definition unit is configured to divide the target data into three dimensional voxels and define randomly selected one of the voxels as the feature region.
[14] In the model generation device of [12], the definition unit is configured to define the feature region by a marker that is attached to the target.
[15] In the model generation device of any one of [12] to [14], the feature region is one of at least two feature regions, and the definition unit is configured to define a line or surface that has a special meaning by a combination of the at least two feature regions.
[16] In the model generation device of any one of [12] to [14], the reference label information includes information regarding whether the feature region is a work portion where a work system of a work device works.
[17] A work system includes the recognition device according to any one of [1] to [11] and a work device configured to perform a predetermined work for the target recognized by the recognition device.

## Claims

1. A recognition device (201, 202) comprising:
a feature region detection unit (21) configured to detect at least three feature regions (62) of a target from captured image data (67) of the target;
a representative point extraction unit (23) configured to:
calculate at least three extracted representative points from the at least three feature regions and the captured image data; and
extract extracted label information (68) identifying each of the at least three extracted representative points; and
a position estimation unit (24) configured to estimate a position and orientation of the target based on the at least three extracted representative points and at least three reference representative points, wherein
the at least three reference representative points have a predefined correct positional relationship with each other and have reference label information identifying each of the at least three reference representative points, and
the position estimation unit is configured to estimate the position and orientation of the target by matching the at least three extracted representative points with the at least three reference representative points based on matching between the extracted label information of each of the at least three extracted representative points and the reference label information of each of the at least three reference representative points.

2. The recognition device according to claim 1, wherein
the feature region detection unit is configured to detect the at least three feature regions by inference using a trained model.

3. The recognition device according to claim 1 or 2, wherein
the captured image data is a depth image.

4. The recognition device according to any one of claims 1 to 3, further comprising
a precise estimation unit (25) configured to estimate the position and orientation of the target more precisely than the position estimation unit, and
the precise estimation unit is configured to input an estimation result created by the position estimation unit.

5. The recognition device according to claim 4, wherein
the precise estimation unit is configured to use only the at least three feature regions detected by the feature region detection unit as input point clouds.

6. The recognition device according to claim 4 or 5, wherein
the precise estimation unit is configured to determine input point clouds based on the extracted label information of the at least three feature regions that are detected by the feature region detection unit.

7. The recognition device according to any one of claims 1 to 6, wherein
the feature region detection unit is configured to detect at least four feature regions.

8. The recognition device according to claim 7, wherein
the position estimation unit is configured to:
define representative point groups, each of the representative point groups including the at least three extracted representative points;
estimate the position and orientation of the target for each of the representative point groups; and
determine a final position and orientation of the target using the estimated position and orientation from each of the representative point groups.

9. The recognition device according to any one of claims 1 to 8, wherein
the target is one of targets, and
the captured image data includes the targets,
the recognition device further comprising
a grouping unit (26) configured to classify feature regions detected by the feature region detection unit, including the at least three feature regions, into groups associated with the respective targets.

10. The recognition device according to claim 9, wherein
the grouping unit is configured to classify the feature regions using information obtained by segmentation of the targets on a pixel basis.

11. The recognition device according to any one of claims 1 to 10, wherein
the target is one of targets, and
the captured image data includes the targets,
the recognition device further comprising
a target determination unit (27) configured to determine a target for which the position and orientation is estimated among the targets, using a detection result of the feature region detection unit.

12. A computer implemented model generation method comprising:
defining, in advance in a target data (52) showing a target:
a feature region (62) of the target;
a reference representative point (66) that is a representative point in the feature region; and
reference label information (64) identifying the feature region or the reference representative point; and
generating a trained model (54) to be used for estimating a position and orientation of the target from a captured image data (67) of the target.

13. The computer implemented model generation method according to claim 12, wherein
the defining of the feature region includes dividing the target data into three dimensional voxels (63) and defining randomly selected one of the voxels as the feature region, or defining the feature region by a marker that is attached to the target.

14. The computer implemented model generation method according to claim 12 or 13, wherein
the feature region is one of at least two feature regions, and
the method further comprising defining a line or surface that has a special meaning by a combination of the at least two feature regions.

15. The computer implemented model generation method according to claim 12 or 13, wherein
the reference label information includes information regarding whether the feature region is a work portion where a work system of a work device works.

16. A work system (30) comprising:
the recognition device (201, 202) according to any one of claims 1 to 11; and
a work device (32) configured to perform a predetermined work for the target recognized by the recognition device.
